# EUROPÄISCHE PATENTANMELDUNG

(11) **EP 0 552 454 A2**
(43) Veröffentlichungstag der Anmeldung: **28.07.1993**
(21) Anmeldenummer: 92120949.0
(22) Anmeldetag: 09.12.1992
(51) Int. Cl.: B01D 46/04

(54) **Vorrichtung zum Reinigen von Filterelementen eines Gasfilters**

(30) Priorität: 07.01.1992 CH 12/92
(71) Anmelder: BÜHLER AG, CH-9240 Uzwil (CH)
(72) Erfinder: Wiedmer, Andreas, CH-9000 St. Gallen (CH); Kaempfer, Heinz, CH-9231 Hauptwil (CH)
(74) Vertreter: Révy von Belvárd, Peter

(57) **Zusammenfassung**

Es wird eine Vorrichtung zum Reinigen einer Vielzahl von in Reihen oder entlang von Kreislinien angeordneten Gruppen (3a, 3i) von Filterelementen (3) eines Gasfilters mittels Flüssigkeitswascheinrichtung vorgeschlagen, bei der ein verbesserter Wascheffekt erzielt wird, ohne die Filterelemente demontieren zu müssen. Das wird durch ein beweglich angebrachtes Leitungssystem (9) erreicht, wobei zwischen jeweils zwei einander benachbarten Filterelementen (3), die zwei einander benachbarten Gruppen (3a, 3i) angehören, sowie zwischen der Gehäuseinnenwandung des Gasfilters und jedem ihr zunächst liegenden Filterelement (3) zumindest je eine Düse bringbar oder dort angeordnet ist. Somit kann die ganze Länge der Filterelemente (3) besprüht werden.

## Beschreibung

Die Erfindung betrifft eine Vorrichtung zum Reinigen einer Vielzahl von in Reihen oder entlang von Kreislinien angeordneten Gruppen von Filterelementen eines Gasfilters mittels einer eine Waschflüssigkeit versprühenden Düsenanordnung nach dem Oberbegriff des Anspruchs 1.

Mit hohen Staublasten beladene Gase werden üblicherweise über gasdurchlässige, schlauchförmige Filterelemente gereinigt, an deren Oberfläche sich der Staub absetzt, wodurch im Verlaufe des Gebrauchs der Gasdurchsatz eingeschränkt wird. Um den anhaftenden Staub zu entfernen, werden die Filterelemente nach einer bestimmten Einsatzzeit geklopft, gerüttelt, mit Schallwellen behandelt oder mit Spülluft in Gegenstromrichtung durchgeblasen. Hierbei wird der anhaftende Staubbelag gelöst und fällt ab.

Es sind auch Filter bekannt, die mehrere auf einer Kreisbahn angeordnete, umlaufende Filterschläuche aufweisen, die während des Transportes auf der Kreisbahn einen Abschnitt durchlaufen, wo sie beispielsweise auf oben beschriebene Art gereinigt werden.

Eine solche Reinigung befriedigt vielfach deshalb die Anforderungen nicht, weil die Staubpartikel, die die Poren verstopfen, zu fest in den Öffnungen des Filtermediums sitzen, so dass Nassreinigungsverfahren für die Reinigung der Schläuche eingesetzt werden. Hierzu werden die Filterschläuche aus dem Filter entfernt und in einer Waschmaschine gewaschen, was mit einer schmutzigen und körperlich anstrengenden Tätigkeit verbunden ist. Die Weiterverfolgung dieses Gedankens führte dazu, den Waschvorgang innerhalb des Filtergehäuses selbst auszuführen. Hierzu ist es bekannt, im Filtergehäuse an Rohren befestigte Waschdüsen anzuordnen, die eine auf die Filterschlauchoberfläche gerichtete Waschflüssigkeit abgeben, was zur Reinigung der Filterelemente und gleichzeitigen Staubbindung führt. Entweder sind die düsentragenden Vorrichtungen zur Verteilung von Waschflüssigkeit fest angeordnet, wie in der DE-OS 25 21 828 gezeigt, oder, wie in der DE-OS 33 16 527 dargestellt, in Längsrichtung der Filterelemente beweglich angeordnet. Es sind auch Ausführungsformen mit rotierenden Düsen bekannt. Allen diesen Wascheinrichtungen ist gemeinsam, dass der Wascheffekt nur eine begrenzte Reinigungswirkung zeigt, da der Flüssigkeitsstrahl unter einem mehr oder weniger konstanten Auftreffwinkel auf die Filterelementenoberfläche auftrifft und somit die anhaftenden Staubteilchen nicht optimal entfernt werden können. Die in der DE-OS 33 16 527 dargelegte Vorrichtung hat darüberhinaus den Nachteil, dass durch die seitlich angeordneten, auf die Filterelementzwischenräume ausgerichteten Sprühdüsen ein Abschattungseffekt eintritt, so dass die von der Düse weiter entfernten Filterelemente nur unvollkommen gereinigt werden.

Aufgabe der Erfindung ist es, die Reinigungswirkung der bekannten Vorrichtungen zu verbessern, ohne die Filterelemente demontieren zu müssen.

Ausserdem ist es Ziel der Erfindung, auf aufwendige Filterkonstruktionen, wie beispielsweise kreisförmig transportierbare Filterelemente, zu verzichten. Die Reinigungsvorrichtung soll wartungsarm und zuverlässig im Betrieb sein.

Dies gelingt durch die Verwirklichung der kennzeichnenden Merkmale des Anspruchs 1. Vorteilhafte Weiterbildungen sind in den kennzeichnenden Merkmalen der abhängigen Ansprüche beschrieben.

Erfindungsgemäss wird dazu vorgeschlagen, Düsen an einem beweglichen Leitungssystem anzuordnen, wobei sich die Düsenanordnung im Staubraum des Gasfilters befindet. Gruppen von einzelnen Filterelementen können dadurch definiert werden, dass die solchen Gruppen zugehörigen Filterelemente jeweils in einer Reihe oder auf einer Kreisumfangslinie liegend angeordnet sind. Aufgrund dieser Anordnung der Düsen, bzw. der infolge ihrer Bewegung mit dem Leitungssystem möglichen Positionierungen, können jeweils zwei einander benachbarte Filterelemente zweier einander benachbarter Filterelementgruppen über ihre gesamte Länge mit Waschflüssigkeit besprüht werden. Dasselbe gilt auch für jedes der der Gehäuseinnenwandung nächst gelegenen Filterelemente, da die Düsen zwischen den entsprechenden Filterelementen und der Innenwandung angeordnet sind bzw. in diese Stellung gebracht werden können, so dass auch diese Filterelemente über ihre gesamte Länge besprüht werden können.

Die Düsen sind dazu auf einem geschlossenen oder auch offenen, rahmenförmigen Leitungssystem angeordnet, das sich zwischen den einzelnen Filterelementgruppen befindet und so gelagert ist, dass es entweder geradlinig vertikal verschiebbar ist, wobei es, der besseren Führung halber, beispielsweise in seitlich angeordneten Schienen, geführt wird; es kann aber auch gegebenenfalls horizontal verschiebbar ausgebildet sein, wobei dies von Bedienungs- und/oder Platzbedarfserwägungen abhängen wird. Das Leitungssystem kann aber auch drehbar gelagert sein, wobei hier die Filterelementgruppen eine rotationssymmetrische Anordnung aufweisen, in deren Mittelpunkt die drehbare Lagerung des Leitungssystems erfolgt. Diese Anordnung zeichnet sich zusätzlich dadurch aus, dass das Leitungssystem auf eine Minimalzahl von düsentragenden Armen beschränkt werden kann. Auf diese Weise wird die von Zeit zu Zeit notwendige Reinigung des Leitungssystems vereinfacht, da kein mehrfach verästeltes System gegeben ist. Und doch werden auch in diesem Fall die Filterelemente mehrseitig von der Reinigungsflüssigkeit besprüht.

Die Vertikal- bzw. die Horizontalbewegung des Leitungssystems kann auch über teleskopartig oder balgartig ausgebildete Bewegungselemente bewirkt werden, wobei diese Bewegungselemente vorzugsweise gleichzeitig als Zuführleitungen für die Reinigungsflüssigkeit dienen. Um die Funktionstüchtigkeit nicht zu beeinträchtigen, sollten diese teleskopartig ineinander einschiebbaren oder balgartig zusammenschiebbaren Gestängeteile insbesondere ausserhalb des Staubraumes des Gasfilters angeordnet sein. Für vertikal bewegbare Filtersysteme bietet sich dazu der Reinraum an, während bei horizontal bewegbaren Systemen Leitungselemente, die durch das Filtergehäuse abgedichtet geführt sind, möglich sind.

Anhand von Ausführungsbeispielen soll die Erfindung näher erläutert werden. Auf den Zeichnungen ist im einzelnen folgendes dargestellt:
- Fig.1: ein vertikaler Schnitt durch eine Filteranlage mit einem um eine zentrale vertikale Achse drehbaren Leitungssystem mit Düsen;
- Fig.2: ein horizontaler Schnitt durch eine Filteranlage mit einem drehbaren, asymmetrischen Leitungssystem;
- Fig.3: ein vertikal bewegbares Leitungssystem mit Düsen, wobei der Hebe- und Senkantrieb durch ein Zugorgan erfolgt, welches gleichzeitig die Zuführung der Reinigungsflüs sigkeit übernimmt;
- Fig.4: ein vertikaler Schnitt durch die in Fig.3 gezeigte Einrichtung.

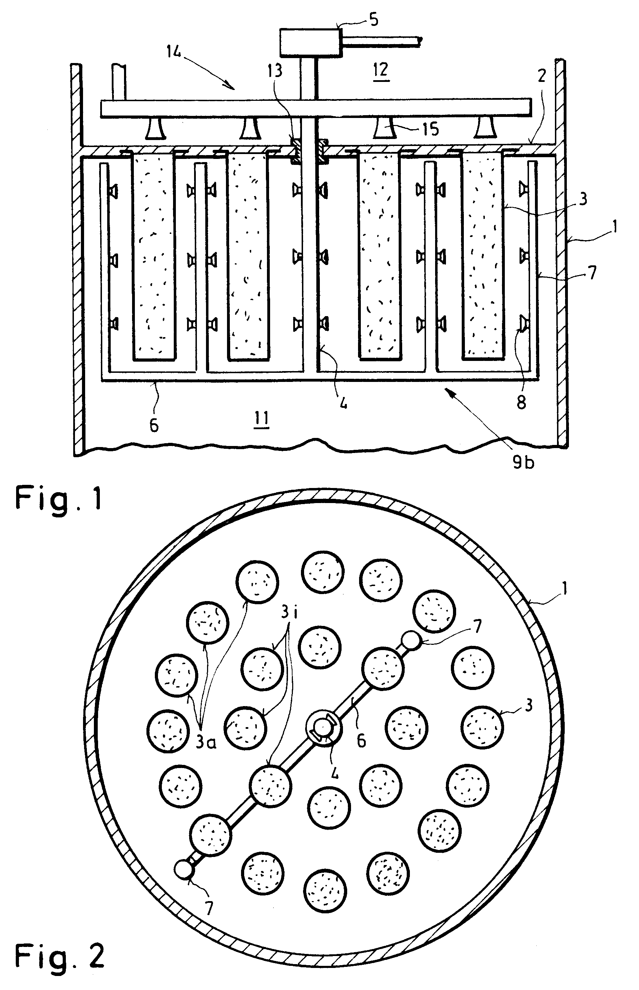

Wie aus Fig.1 ersichtlich, ist in einem Filtergehäuse 1 eine Trennplatte 2 angeordnet, die den Staubraum 11 und den Reinraum 12 des Filters voneinander trennt. In der Trennplatte 2 sind Öffnungen vorhanden, in welchen Filterelemente 3 eingesetzt sind. Die Filterelemente 3 bilden entsprechend Fig.2 zwei Gruppen 3a und 3i von Elementen, die konzentrisch zueinander angeordnet sind. Unterhalb der Filterelemente 3 befindet sich ein Sammelraum (nicht dargestellt) für den ausgewaschenen Staub und die Reinigungsflüssigkeit, welche mit einer nicht dargestellten Schleuse aus dem Filtergehäuse 1 ausgetragen werden.

Im Zentrum der Anordnung befindet sich eine Zuführleitung 4 für die Reinigungsflüssigkeit. Diese Zuführleitung 4 ist oberhalb der Trennplatte 2 drehbar gelagert. Hier befindet sich auch der Antrieb (nicht dargestellt) sowie ein Drehanschluss 5 zur Zuführung der Reinigungsflüssigkeit. Unterhalb der zentralen Zuführleitung 4 und unterhalb der Filterelemente 3 ist ein Querrohr 6 vorgesehen, welches fest mit der zentralen Zuführleitung 4 verbunden ist.

Die Durchführung der Zuführleitung 4 durch die den Reinraum 12 vom Staubraum 11 des Filtergehäuses 1 trennende Trennplatte 2 ist mit einer Dichtung 13 versehen, beispielsweise einer Gleitring- oder einer Stopfbuchsendichtung.

Am Querrohr 6 sind vertikale Steigleitungen 7 angebracht, welche in den Raum zwischen den Filterelementen 3 hineinragen sowie in den Raum zwischen diesen und der Gehäuseinnenwand. Die vertikalen Steigleitungen 7 sind so bemessen, dass sich das Leitungssystem frei drehen lässt.

Die Anordnung der vertikalen Steigleitungen 7 am Querrohr 6 kann, wie in Fig.1 gezeigt, sowohl symmetrisch als auch asymmetrisch - entsprechend der in Fig.2 gezeigten Anordnung - erfolgen, wobei bei letzterer in jeden Filtergruppenzwischenraum nur eine vertikale Steigleitung 7 hineinragt.

Durch an den vertikalen Steigleitungen 7 und der zentralen Zuführleitung 4 angebrachte Düsen 8, die auf die Filteroberflächen gerichtet sind, lässt sich, wenn das Leitungssystem in Drehung versetzt wird, die gesamte Oberfläche der Filterelemente 3 mit Reinigungsflüssigkeit versorgen, wobei die am Filtermedium anhaftenden Staubteilchen aus den unterschiedlichsten Auftreffwinkeln besprüht werden.

Die Reinigung der Filterelemente 3 wird noch verbessert, wenn zusätzlich Düsen an dem Querrohr 6 vorgesehen werden, die die Filterelemente 3 auch von der Unterseite her besprühen.

Vorteilhafterweise lässt sich die vorgeschlagene Reinigungsvorrichtung mit einer an sich bekannten Druckluftreinigungsvorrichtung 14 kombinieren, bei der von der Reinluftseite her über Düsen 15 in jedes Filterelement 3 ein Druckluftimpuls geleitet wird.

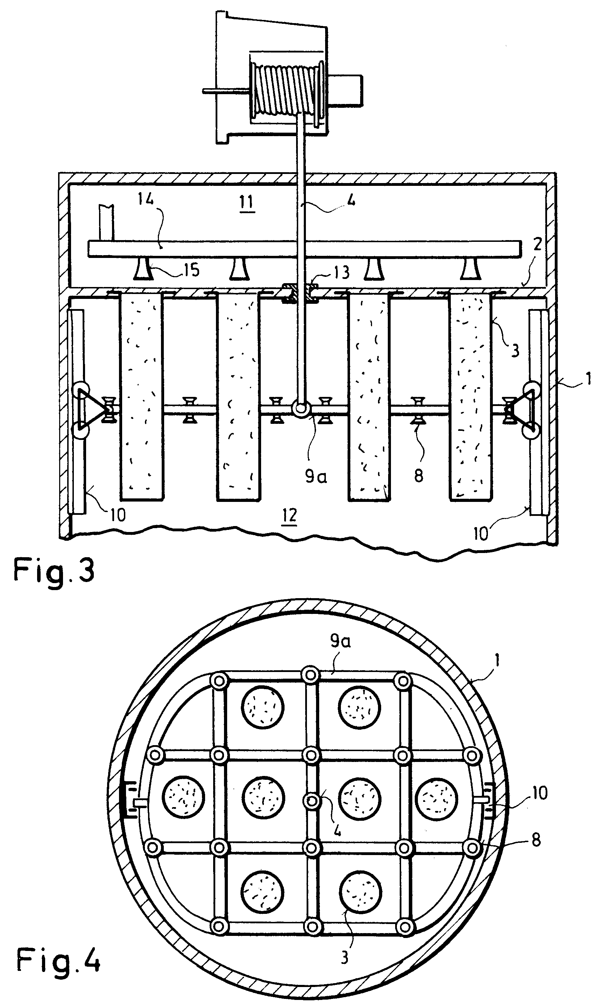

Eine weitere, vorteilhafte Ausgestaltung der Erfindung ist aus den Fig.3 und 4 ersichtlich. Hier ist das Leitungssystem 9a als ebenes Gitternetz ausgebildet, die Filterelemente 3 sind in dessen Zwischenräumen angeordnet. Das Leitungssystem 9a wird in seitlich angebrachten Schienen 10 geführt, die während der Bewegung eine seitliche Verdrehung und damit eine Berührung der Filteroberfläche verhindern. Die Bewegung des gitternetzartigen Leitungssystems 9a erfolgt über eine zentral angeordnete, flexible, insbesondere auf- und abrollbare Zuführleitung 4, welche gleichzeitig die Versorgung mit Reinigungsflüssigkeit übernimmt. Anstelle dieser flexiblen Leitung 4 kann auch ein teleskopartig verkürz- bzw. verlängerbarer Teil der Zuführleitung vorgesehen sein, wobei vorzugsweise die Schubhülsen dieses Teils ausserhalb des Staubraums 12 angeordnet sein sollten.

Die in Gruppen von Reihen bzw. Spalten angeordneten Filterelemente 3 befinden sich im wesentlichen in konstantem Abstand voneinander. Vorteilhafterweise sind die Düsen 8 im ebenen Leitungssystem 9a an den diagonalen Kreuzungspunkten der Filterelemente 3 am Leitungssystem 9a befestigt. Sie können sowohl nach oben als auch nach unten gerichtet sein.

Bei einer vertikalen Bewegung dieses gitternetzartigen, ebenen Leitungssystems 9a wird die gesamte Oberfläche der Filterelemente 3 abgewaschen.

Es ist in analoger Weise möglich, ein Leitungssystem, das entsprechend dem der Fig.1 ausgebildet ist und bei dem keine zentrale, durch die Trennplatte gehende Zuführleitung vorgesehen ist, horizontal zu bewegen, wenn die Filterelemente eine der Fig.4 entsprechende Anordnung zeigen. Dann wird die Zuführleitung, über die gegebenenfalls gleichzeitig die Horizontalbewegung ermöglicht wird, unterhalb der Filterelemente liegen und durch die Wand des Filtergehäuses in den Staubraum reichen. Auch hier sollten vorzugsweise die Teleskopteile bzw. der Balgteil ausserhalb des Staubraumes zu liegen kommen.

## Patentansprüche

1. Vorrichtung zum Reinigen einer Vielzahl von in Reihen oder entlang von Kreislinien angeordneten Gruppen (3a,3i) von Filterelementen (3) eines Gasfilters, mittels einer eine Waschflüssigkeit versprühenden, im Staubraum des Gasfilters befindlichen Düsenanordnung an einem beweglichen Leitungssystem (9), dadurch gekennzeichnet, dass zwischen jeweils zwei einander benachbarten Filterelementen (3), die zwei einander benachbarten Gruppen (3a,3i) angehören sowie zwischen der Gehäuseinnenwandung des Gasfilters und jedem ihr zunächst liegenden Filterelement (3) zumindest je eine Düse (8) bringbar oder dort angeordnet ist, derart, dass die ganze Länge der Filterelemente (3) besprühbar ist.

2. Vorrichtung nach Anspruch 1, dadurch gekennzeichnet, dass die Düsen (8) an einem Leitungssystem (9a) aus einem ebenen, gitternetzartigen Rahmen angeordnet sind, welcher sich zwischen die einzelnen Filterelemente (3) erstreckt und geradlinig vertikal beweglich gelagert - vorzugsweise in seitlich angebrachten Schienen (10) geführt - ist.

3. Vorrichtung nach Anspruch 1 oder 2, dadurch gekennzeichnet, dass je zwei Düsen (8) an dem Leitungssystem (9) in zwei einander annähernd entgegengesetzte Richtungen gerichtet sind.

4. Vorrichtung nach Anspruch 1 oder 3, dadurch gekennzeichnet, dass das Leitungssystem (9b) eine zentrale, drehbar gelagerte Zuführleitung (4) aufweist, welche in einem - vorzugsweise verschieden lange Arme aufweisenden - Querrohr (6) mündet.

5. Vorrichtung nach Anspruch 4, dadurch gekennzeichnet, dass an dem Querrohr (6) wenigstens eine vertikale Steigleitung (7) angebracht ist, die sich zwischen zwei Filterelemente (3), bzw. zwischen ein Filterelement (3) und die Gehäuseinnenwandung erstreckt, wobei das Querrohr (6) und/oder die Steigleitung (7) Düsen (8) tragen.

6. Vorrichtung nach Anspruch 5, dadurch gekennzeichnet, dass die Anordnung der vertikalen Steigleitungen (7) auf dem Querrohr (6) symmetrisch zur zentralen Zuführungsleitung (4) erfolgt.

7. Vorrichtung nach einem der vorhergehenden Ansprüche, dadurch gekennzeichnet, dass wenigstens ein teleskop- oder balgförmig ausgebildetes, eine Vertikal- oder eine Horizontalbewegung der Düsenanordnung ermöglichendes Bewegungselement mit dem Leitungssystem (9) verbunden ist.

8. Vorrichtung nach Anspruch 7, dadurch gekennzeichnet, dass das Bewegungselement ein Teil des Leitungssystems (9), vorzugsweise die Zuführleitung (4), ist.

9. Vorrichtung nach Anspruch 7 oder 8, dadurch gekennzeichnet, dass der teleskop- bzw. balgförmig ausgebildete Teil des Bewegungselements ausserhalb des Staubraumes (11) liegt.
